# EUROPEAN PATENT SPECIFICATION

(11) **EP 1 537 573 B1**
(45) Date of publication and mention of the grant of the patent: **06.02.2008**
(21) Application number: 03791081.7
(22) Date of filing: 24.07.2003
(51) Int. Cl.: G11B 20/00, G11B 27/32, G06F 1/00

(54) **ENTRY POINT FOR DIGITAL RIGHTS MANAGEMENT DATA**
EINTRITTSPUNKT FÜR DATEN DER DIGITALEN RECHTEVERWALTUNG
POINT D'ENTREE POUR DONNEES SUR DES DROITS D'UTILISATION ELECTRONIQUE

(30) Priority: 29.08.2002 NL 1021352
(43) Date of publication of application: 08.06.2005
(73) Proprietor: Koninklijke Philips Electronics N.V., 5621 BA Eindhoven (NL)
(72) Inventor: FONTIJN, Wilhelmus, F., J., NL-5656 AA Eindhoven (NL); BENTVELSEN, Petrus, H., C., NL-5656 AA Eindhoven (NL); SCHOLL, Gerrit, J., NL-5656 AA Eindhoven (NL)
(74) Representative: Bekkers, Joost J.J
(86) International application number: PCT/IB2003/003337
(87) International publication number: WO 2004/021345

(56) References cited:
- EP-A- 0 756 279
- WO-A-02/15184
- OSTA: "Universal Disk Format Specification, Revision 2.01" 15 March 2000 (2000-03-15) XP002256767 page 21 -page 55

## Description

The present invention relates to a record carrier having a program memory area for storing administrative data, a lead in area, a program area for storing user data and a lead out area. The present invention relates further to a method of accessing digital rights management data stored in the program area of such a record carrier, a method of recording digital rights management data on such a record carrier, a corresponding drive and recording device as well as to a computer program for implementing said methods.

According to adaption layer specifications for implementing a security system for read-only and rewritable optical discs digital rights management data is located in the lead in of the disc volume. The entry point for the digital rights management (DRM) data is contained in a DRM pointer entry, in particular in an adaption layer parameter space (ALP). Therein the physical locations of all key locker duplicates are listed, the key locker being the structure that contains both the rights and the keys to the protected data. For the read-only and rewritable access type discs the DRM pointer, in particular the ALP, is located at an address that is more or less fixed relative to the beginning of the program area. In these cases the DRM pointer entry can be easily found.

For a recordable (write once) access type optical disc DRM data can be located anywhere in the program area, and the DRM pointer entry can be located anywhere after the DRM data. Finding the DRM pointer entry on a recordable disc is thus not straight forward. Without additional measures it would involve scanning the whole of the recorded program area until the DRM pointer entry is found, which can take a lot of time. A complication is that the drive is responsible for writing the DRM data and the DRM pointer entry. A simple file containing a reference to the DRM pointer entry is therefore not a solution to the problem as the drive has no knowledge of files. It is possible to devise a mechanism by which the drive writes the DRM pointer entry and communicates the location to the application that subsequently writes it to a file. However, this remains a non-optimal solution as it is relatively complicated, involves additional communication between drive and application and is less secure. In addition, locating the file entry that describes the DRM pointer entry file can in itself be a time-consuming process that could involve jumping across the program area several times.

Another complication is that it is possible that a disc written using the recordable access type is finalized using a non-compliant drive. If this occurs a problem that exists for an open session remains after finalization.

A related problem is how the drive can detect, at mount time, that a disc contains DRM data. This is useful because it offers the opportunity to retrieve the key locker pre-emptively. In case of a read-only or rewritable disc mounting the disc would start with scanning the lead in to retrieve the session parameters that are stored in the Q subchannel. By choosing the standard location of the area that contains the DRM pointer entry as a starting point a drive can detect whether the disc contains DRM data at the same time.

It is therefore an object of the present invention to provide a record carrier which solves the above problems and, in particular, which allows a drive to make use of file system structures without in-depths knowledge of the file system itself. Further, corresponding methods of accessing or recording digital rights management data on a record carrier and corresponding devices shall be provided.

This object is achieved according to the present invention by a record carrier wherein
- digital rights management data are stored in the program area,
- a DRM pointer entry comprising the entry point for said digital rights management data is stored in the program area after said digital rights management data and
- a drive-readable entry comprising an information allowing the drive to find said DRM pointer entry and to access said digital rights management data is stored in said program area or said program memory area.

The present invention is based on the idea to introduce a drive-readable entry pointing to the DRM pointer entry in particular to the ALP, which enables the drive to find the DRM pointer entry and, by using that entry, to find and access the DRM data. That drive-readable entry may either be stored in the program area or the program memory area, whereby both implementations have to ensure that the entry can be read by the drive. For this the drive can use a file system structure without actually knowing the file system. In that case even non-compliant or unaware implementations maintain the information.

It should be noted that the present invention is not restricted to recordable (write-once) CDs (CD-R), but can be applied to other optical discs as well, like other access type CDs or DVDs, such as a recordable DVD (DVD-R) in which case the area for storing administrative data is referred to as recording management area (RMA) instead of program memory area (PMA). Thus, the term "program memory area" used in this application show include such a recording management area as well.

Preferred embodiments of the invention are defined in the dependant claims.

According to the first preferred embodiment of the invention an ALP pointer entry is stored in the program memory area which either comprises the address of the DRM pointer entry or a reference to a virtual allocation table entry (VAT) pointing to said DRM pointer entry (ALP). In particular, the actual physical address of the DRM pointer entry or the sequence number or byte position of the virtual allocation table entry that contains the ALP pointer entry is stored in the program memory area. This solution is very robust. It is shielded from any activity of the application or file system driver. However, once the session is finalized the program memory area is no longer in the common mount path and the value stored in it will only be retrieved if the drive is told explicitly, e. g. by the application, to retrieve the pointer from the program memory area. Therefore, compliant drives could as a standard practise scan the program memory area but this would introduce an undesirable delay in the mounting of non-compliant discs.

Storing the physical address of the DRM pointer entry is file system independent and will also work ifUDF (universal disc format) which is currently used as standard file system, is not used as the actual file system. However, currently there is no alternative for UDF for the described program domain, and the number of PMA entries that can be used is currently limited to 100. This means that only at most 100 different ALP pointer entries can be stored in this way.

Storing the virtual allocation table entry that points to the DRM pointer entry is tied to UDF. Using the ALP pointer entry stored in the program memory area to enable the drive to make use of a file system structure, in particular the virtual allocation table, without knowing anything of the file system is one preferred option.

According to another embodiment of the invention a descriptor, in particular an implementation use volume descriptor (IUVD), storing a reference to a virtual allocation table entry (VAT) pointing to the DRM pointer entry is stored in the program area. The descriptor preferably holds the sequence number of the virtual allocation table entry that is used or the byte position of the address in the sector holding the virtual allocation table, in particular the logical address of the DRM pointer entry counted from the beginning of the partition or the physical address of the DRM pointer entry. By this solution a compliant UDF file system implementation initialises the session. The advantage is that the IUVD will remain in the common mount path even after a non-compliant drive has finalized the session.

One option to achieve an entry in the virtual allocation table pointing to the DRM pointer entry is to let the drive insert or create a virtual allocation table entry pointing to the DRM pointer entry. The danger of this solution is that, if a UDF repair utility is used, it will detect that the thus created virtual allocation table entry does not point to an actual file and may remove it. The latter will not invalidate the disc, but it will make mounting less efficient. Furthermore, the occurrence of such an event is unlikely.

Determining which virtual allocation table entry points to the DRM pointer entry can be achieved in several ways. An option, as defined in claim 7, is to include two entries in the virtual allocation table, one identifying that the next entry is the DRM pointer entry, e. g. because it contains a magic number outside the valid address range of the medium it is recorded on, and another entry containing the actual DRM pointer entry.

According to still another preferred embodiment a file entry comprising a pointer to said virtual allocation table entry, to said DRM pointer entry or to a file storing the address of such DRM pointer entry is stored in the program area. Preferably the file resides in virtual space only if the file entry uses the VAT table entry pointer as the address of the file. The first step is to define a file. Either the ALP itself is called a file or a file is created that contains the address of the ALP. The second step is to create a file entry that describes the file in the file system. This file entry contains of the file either a virtual address or a physical address. Within standard UDF implementations for data usually a physical address is used. If a virtual address is used then the file resides in virtual space, which is not common for data but useful here. The virtual address is a pointer to an entry in the VAT. In other words, the address recorded in the file entry for that file is the VAT entry (sequence number) holding the physical address of the actual file (the data).

This solution is robust against UDF repair utilities as the virtual allocation table entry still points to actual data and a file entry still exists for that data, i. e. the data is in a file within the file system. The ALP pointer entry can thus be found using the file system since the DRM pointer entry is given a certain file name that is included in the file system.

A method of accessing digital rights management data according to the present invention comprises the steps of:
- reading a drive-readable entry, which is stored in said program area or said program memory area, comprising an information allowing the drive to find said DRM pointer entry and to access said digital rights management data, and
- using said information comprised in said drive-readable entry to read said DRM pointer entry, which is stored in the program area after said digital rights management data, comprising the entry point for said digital rights management data,
- using said entry point comprised in said DRM pointer entry to access said digital rights management data.

A method of recording digital rights management data according to the present invention comprises the steps of:
- storing said digital rights management data in the program area,
- storing a DRM pointer entry in the program area after said digital rights management data, said DRM pointer entry comprising the entry point for said digital rights management data, and
- storing a drive-readable entry in said program area or said program memory area, said drive-readable entry comprising an information allowing the drive to find said DRM pointer entry and to access said digital rights management data.

A drive according to the present invention comprises:
- reading means for reading a drive-readable entry, which is stored in said program area or said program memory area, comprising an information allowing the drive to find said DRM pointer entry and to access said digital rights management data, and
- evaluation means for evaluating said information comprised in said drive-readable entry and transmitting it to said reading means, said reading means being adapted to read said DRM pointer entry, which is stored in the program area after said digital rights management data, comprising the entry point for said digital rights management data, said evaluation means being adapted for evaluating said entry point comprised in said DRM pointer entry and transmitting it to said reading means for accessing said digital rights management data.

Further, the present invention relates to a recording device for recording digital rights management data comprising recording means for said digital rights management data in the program area, for storing a DRM pointer entry in the program area after said digital rights management data, said DRM pointer entry comprising the entry point for said digital rights management data and for storing a drive-readable entry in said program area or said program memory area, said drive-readable entry comprising an information allowing the drive to find said DRM pointer entry and to access said digital rights management data.

The present invention also relates to a computer program comprising computer program code means for causing a computer to perform the steps of the methods according to the invention when that computer program is run on a computer.

The invention will now be explained in more detail with reference to the drawings in which
Fig. 1 shows a block diagram of a data reproduction device,
Fig. 2 shows layouts of an empty and an initialised disc,
Fig. 3 illustrates the use of an ALP pointer entry,
Fig. 4 illustrates the addition of data using an ALP pointer entry,
Fig. 5 illustrates the use of an implementation use volume descriptor,
Fig. 6 illustrates the implementation use volume descriptor mechanism,
Fig. 7 illustrates the addition of data when using an implementation use volume descriptor,
Fig. 8 illustrates the use of two virtual allocation table entries, and
Fig. 9 illustrates the use of a file entry.

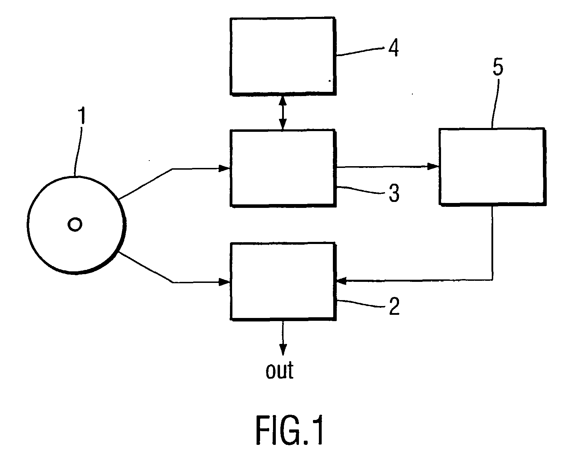

Fig. 1 shows a block diagram of a reproduction device according to the present invention. To read user data from a disc 1 a reading unit 2 is provided. However, part or all of the user data may be subject to usage restrictions as defmed in a digital rights management (DRM) system agreed upon by content providers and consumers. This means that content stored on the disc 1 may be encrypted, and the content has to be decrypted before it can be replayed by the user. Therefore cryptographic keys can, for instance, be stored in a particular area on the disc. Further, usage rights can be stored on the disc 1, e. g. indicating if a user is allowed to make copies of the content. Such usage rights and keys shall be referred to as DRM data in the following. To read such DRM data a respective DRM reading unit 3 is provided. To find an access to that DRM data one or more pointers have to be found and evaluated by an evaluation unit 4 before the DRM data can actually be read. The read DRM data will then be used to control the output of user data, i. e. control unit 5 will control the content reading unit 2, for instance prohibit the output of data if a usage right prohibits the output or decrypt user data before outputting it. Of course, other usage rights can be contained in that DRM data as well leading to a different control of the output of user data. The reading units 2, 3 and the evaluation unit 4 can also be considered as a drive.

In particular for a recordable optical record carrier the DRM data can be located anywhere in the program area, and the adaption layer parameter space (ALP) which is used as DRM pointer entry comprising the entry point for that DRM data is located anywhere after the DRM data. It will always be possible to find the ALP by scanning backwards starting from the last valid block on the disc. However, this procedure can be very time-consuming. In the following, different measures shall be explained for enabling a drive to access the DRM data stored in the program area of a disc.

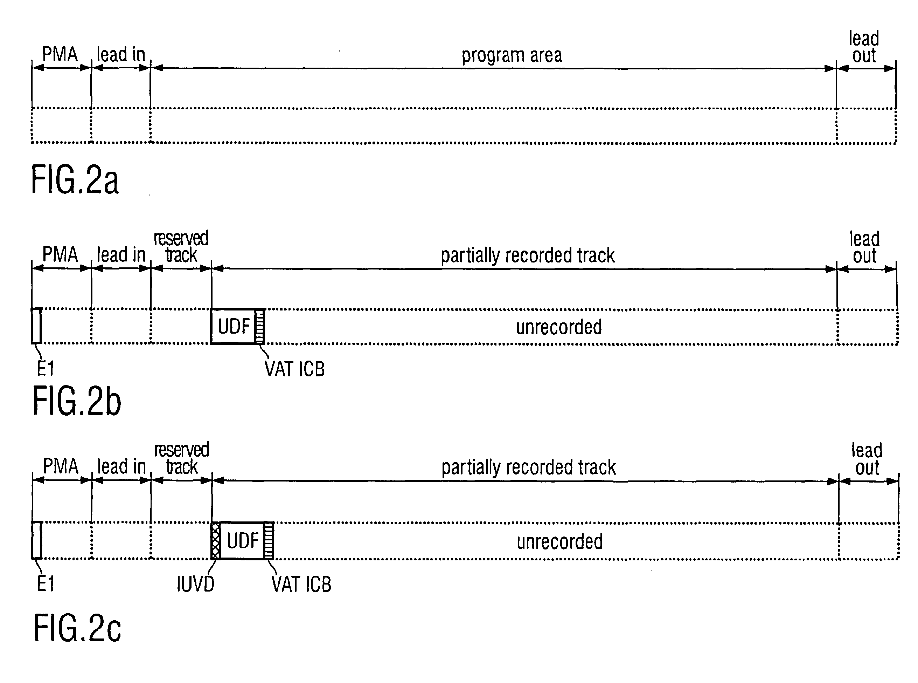

Fig. 2a shows a layout of an empty disc where the power calibration area (PCA) has been left out. From left to right reserved spaces provided for the program memory area PMA, the lead in area, the program area and the lead out area are shown.

Fig. 2b shows the layout of an initialised disc which, in the particular example, is unaware of a particular standard, e. g. a CD2 standard or the Orange Book part II standard. A CD2 unaware initialisation of a CD-R for sequential access means that there are no CD2 specific structures on disc and any host (drive, application) will recognize the disc as being a standard (non-CD2) disc. It also means that CD2 content placed on this disc, e. g. by some form of super-distribution, cannot be accessed for rendering until a CD2 aware application activates the content using a CD2 drive. As shown in Fig. 2b, in the PMA the location of the first (reserved) track and the second (UDF data) track are recorded in an initial entry E1. A section marked with UDF holds all volume structures. Further, a virtual allocation table VAT information control block ICB is provided after the UDF section. A VAT is an UDF structure that provides address remapping. In this case the VAT ICB also hold the VAT itself.

If it is assumed that the UDF implementation used is CD2 unaware, then no CD2 specific structures are included in the initialisation. At that time the system cannot by itself determine if the CD will be used for storing CD2 content in the future and, therefore, a CD2 PMA entry cannot be included in the initialisation procedure pre-emptively. If the UDF implementation used is CD2 aware then the CD2 implementation use volume descriptor (IUVD) can be recorded as shown in Fig. 2c. Apart from being the CD2 marker in case of an otherwise generic disc, the IUVD provides the location of the ALP address in the VAT. This location can be fixed, e. g. being the first entry, if the VAT is guaranteed to be deterministic when the ALP is added, i. e. if there are no previous sessions. According to a first embodiment of the invention an ALP pointer stored in the PMA shall be used. If CD2 data shall be recorded on a non-CD2 disc the drive needs to be a CD2 drive. The UDF implementation can be generic and the application is irrelevant.

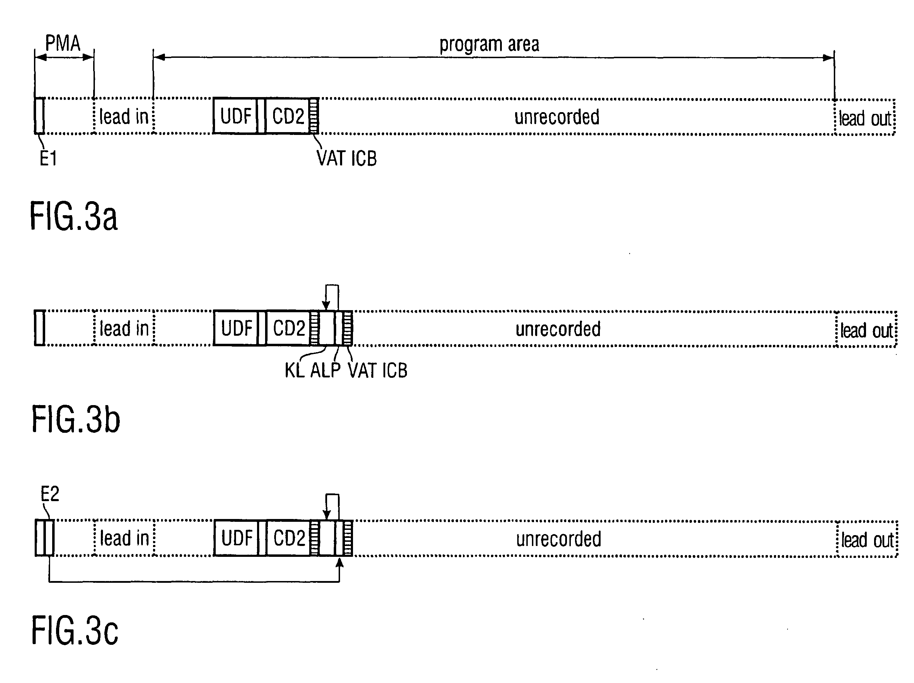

Fig. 3a shows a storage layout after a CD2 unaware UDF implementation has added CD2 data. Just prior to physically ejecting a disc or upon detection of the writing of the VAT the key lockers KL and the ALP are written and the VAT is reproduced as shown in Fig. 3b. The key locker is a container for the usage rights and asset keys, i. e. the DRM data which have to be accessed by the drive of the reproduction device before the CD2 data can be reproduced. The ALP is a structure that contains the entry point for said key lockers KL, i. e. it enables to find the location of the DRM data KL. In order to allow a drive to find the ALP an ALP pointer entry E2 containing an ALP pointer is recorded in the PMA. In this case the drive needs to be a CD2 drive. It should be noted that "UDF" indicates non-CD2 data and "CD2" indicates CD2 data.

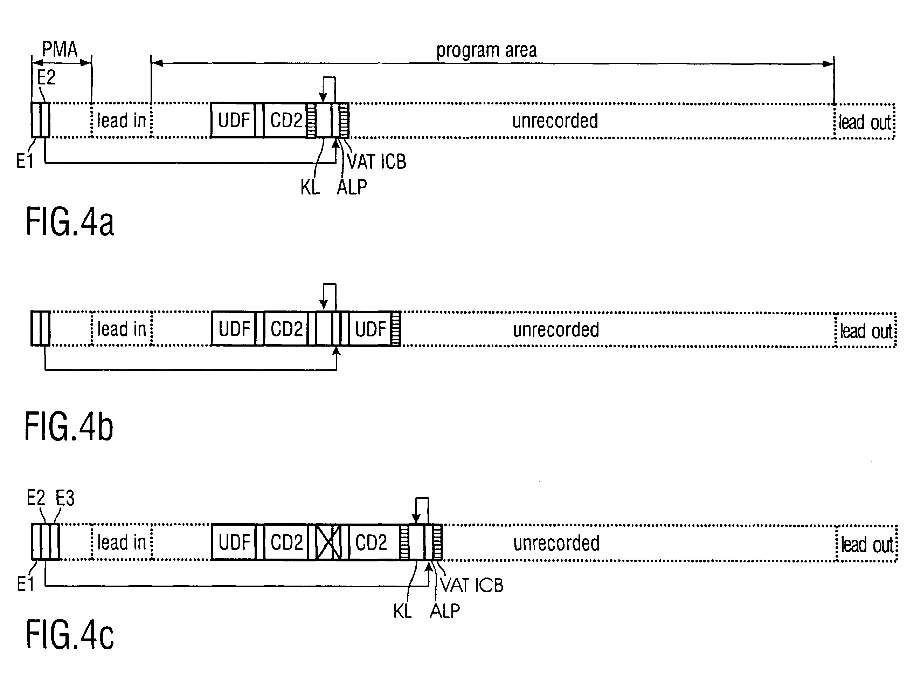

Any subsequent addition of data is independent from the history of the disc. Fig. 4a is identical to Fig. 3c and shows the final state after adding the ALP pointer entry E2. When adding non-CD2 data, as shown in Fig. 4b, these special measures are taken because if not-CD2 data is added, as shown in Fig. 4b, a link to the ALP, i. e. the ALP pointer entry E2, will be preserved. Adding CD2 data, as shown in Fig. 4c, is only possible in a CD2 drive. In this case the KL, ALP and VAT ICB are re-written. Further the ALP pointer entry E2 has to be renewed into ALP pointer entry E3.

It should be noted that the maximum number of entries in the PMA limits the number of times the ALP pointer entry can be updated (in practice to about 100). The described scheme is very robust and requires no driver or application support. However, the translation and alteration of the VAT is a sensitive issue. The VAT ICB is the last structure on the disc it is a pointer to the VAT. If the size of the VAT and the VAT ICB combined is smaller than the logical block size (2 KB on CD) then the VAT ICB contains the VAT itself. The latter is almost always the case and in case of CD2 it is required.
While in the above described embodiment the ALP pointer entry stored in the PMA comprises a reference to the ALP, in particular the address of the ALP, in a slightly different embodiment the ALP pointer entry may comprise a reference to the VAT entry which points to that ALP. Both embodiments lead to the same results, i. e. allow a drive which is able to read the ALP pointer entry to finally find the DRM data.

According to another embodiment the above-mentioned implementation use volume descriptor IUVD shall be used for that purpose. The CD2 specific IUVD is optional. The use of the IUVD requires the initialising UDF implementation to be CD2 aware. The scheme that the IUVD is part of also requires the insertion of the physical block number (PBN) of the ALP in the VAT. The IUVD indicates which VAT entry identifies the location of the ALP. Although generic UDF implementations will preserve the link, it will not be updated. Hence, if the ALP is rewritten using a CD2 unaware UDF implementation the value of the PBN of the ALP in the VAT will not be correct unless a special procedure is in place that allows the drive to update the physical address of the ALP in the VAT. Failing to guarantee that means that the value recorded in the PMA must always take precedence over the value recorded in the VAT. It should be noted that this influences the procedure for the localization of the ALP only. In any case there is only one valid ALP.

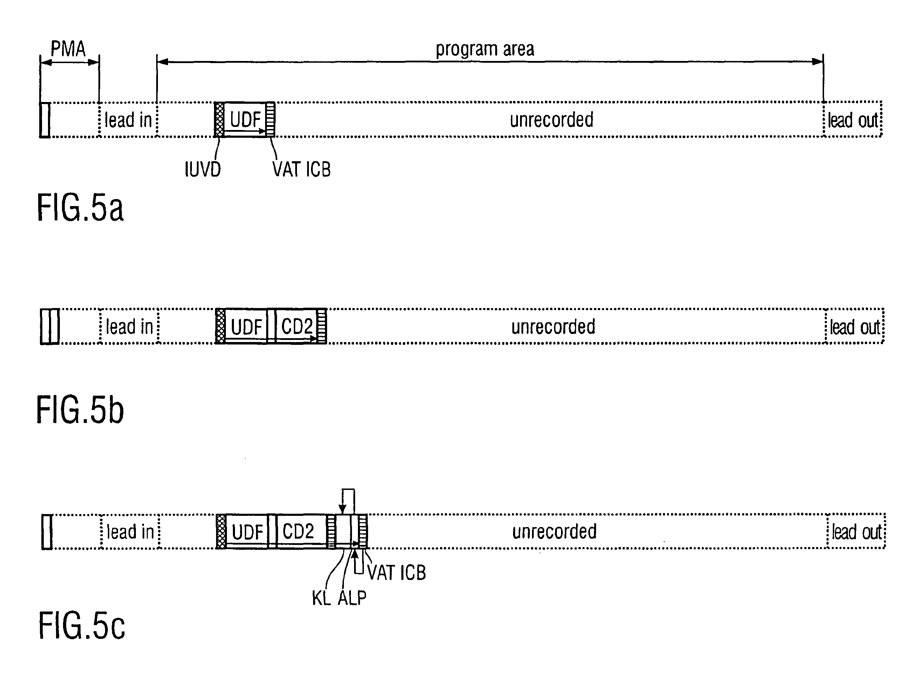

Fig. 5a shows the layout of the disc structure where an IUVD, an UDF data entry and a VAT ICB are recorded in the program area. The IUVD holds the number of the entry in the VAT that identifies the physical address of the ALP pointer, indicated by the arrow. If, as shown in Fig. 5b, a CD2 unaware UDF implementation adds CD2 data the VAT ICB is rewritten. Just prior to physical ejecting a disc or upon detection of the writing of the VAT the KL and ALP are written as shown in Fig. 5c. The VAT is copied and the PBN of the ALP is inserted in the VAT at the appropriate position.

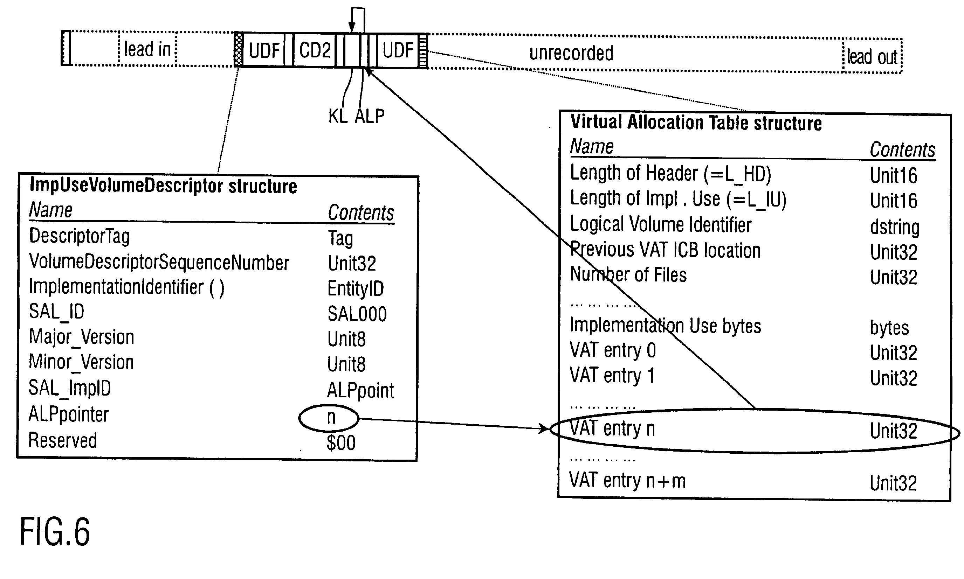

This is illustrated in Fig. 6 showing on top the layout of the data structure of the disc as shown in Fig. 5c after another UDF data entry has been made leading to a shift of the VAT ICB. Shown is the IUVD structure comprising an entry "ALP pointer" the content of which is "n". That entry "n" indicates that VAT entry "n" of the shown VAT structure holds the physical address of the ALP.

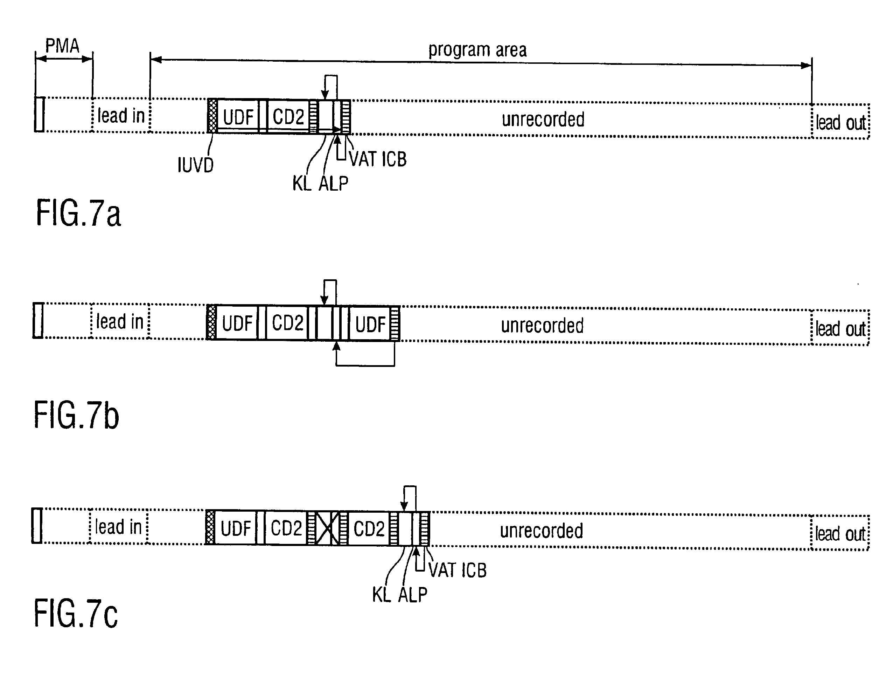

Any subsequent addition of data is independent from the history of the disc. If non-CD2 data is added the ALP VAT entry is preserved. If CD2 data is added a CD2 drive is required. This is illustrated in Fig. 7. Fig. 7a shows a layout as shown in Fig. 5c. When adding non-CD2 data as shown in Fig. 7b no special measures are needed since the link to the ALP will be preserved in the shifted VAT ICB. Adding CD2 data, as shown in Fig. 7c, is only possible in a CD2 drive. The KL, ALP and VAT ICB are then to be rewritten as shown.

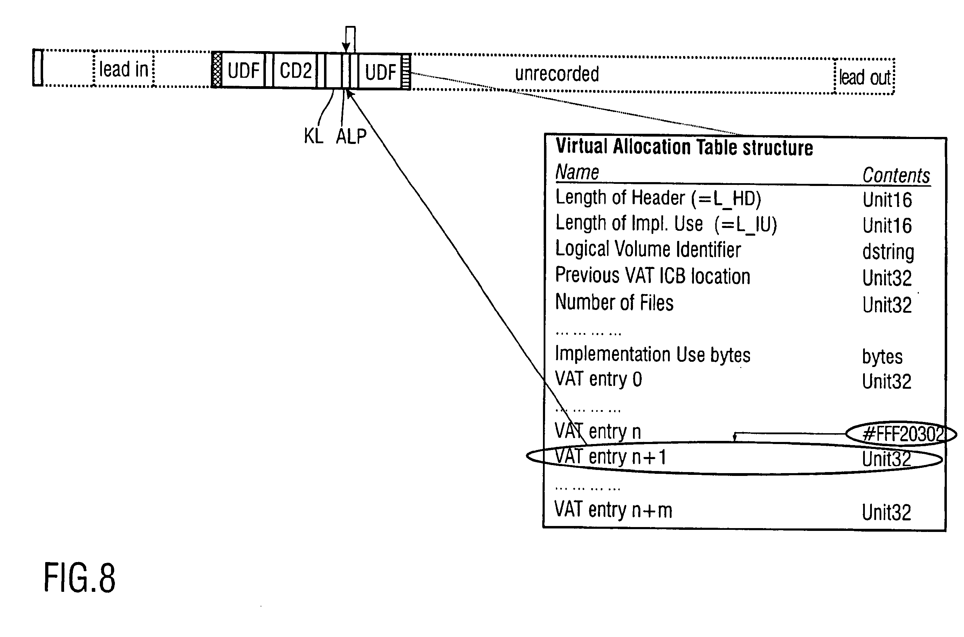

According to still another embodiment which shall be illustrated with reference to Fig. 8 two entries are provided in the VAT. The first entry (VAT entry n) identifies that the next entry (VAT entry n+1) is the ALP pointer, e. g. because it contains a magic number. The subsequent entry (VAT entry n+1) contains the actual ALP pointer, in particular comprises the address of the ALP.

In still another embodiment of the invention an entry in the VAT pointing to the ALP is achieved by creating a file entry in the virtual partition. The first step is to define a file. Either the ALP itself is called a file or a file that contains the address of the ALP is created. The second step is to create a file entry FE that describes the file in the file system. This FE contains of the file either a virtual address or a physical address. Within standard UDF implementations for data usually a physical address is used. If a virtual address is used then the file resides in virtual space, which is not common for data but useful here. The virtual address is a pointer to an entry in the VAT. In other words, the address recorded in the FE for that file is the VAT entry (sequence number) holding the physical address of the actual file (the data).

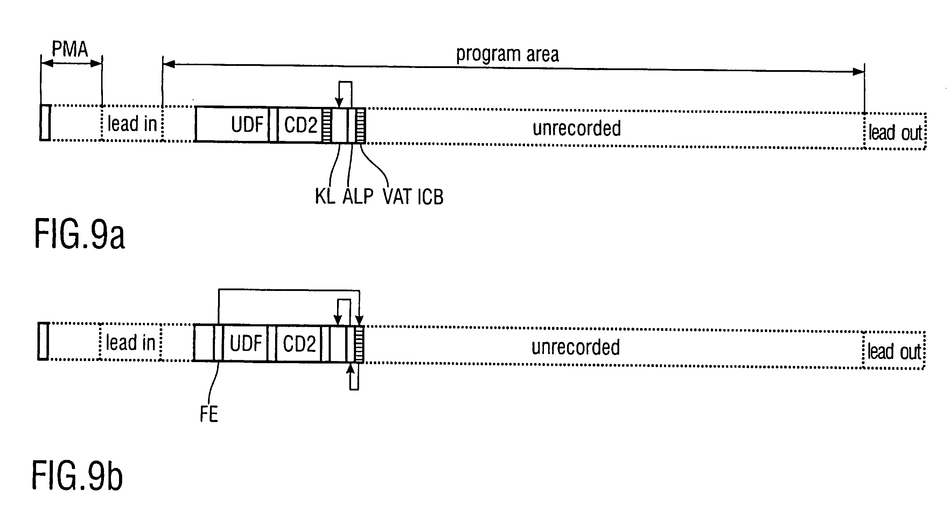

This is illustrated in Fig. 9. Fig. 9a shows the layout without the proposed file entry. The VAT points to the ALP which points to the KL. In Fig. 9b a file entry has been inserted and stored in the program area. That file entry FE comprises a pointer to the VAT. This solution is robust against UDF repair utilities as the VAT entry still points to actual data and a file entry FE still exists for that data, i. e. the data is in a file within the file system. The ALP pointer can thus be found using a file system since the ALP is given a certain file name that is included in the file system.

According to a variation it is possible to let the application create a file with a virtual address. The virtual address as stored in the VAT will point to either a file containing the physical address of the ALP or to the physical location of the ALP directly. The actual finalization process for the embodiments as described above will be initiated from an application. This application can be CD2 aware or not. The drive that performs the finalization can also be either CD2 aware or not.

Another issue is how the drive determines when to write the key locker area (KLA) comprising the KL and ALP. Ideally, this is done just prior to the writing of the VAT before the disc is ejected.

However, the drive has no way of knowing when the VAT is written. It creates too much overhead to inspect each block to determine if it might be the VAT. The drive cannot rely on the application to tell it when the VAT is written because the application itself does not know. Furthermore, the VAT is not only written if the disc is to be ejected, the KLA ideally is.

A feasible solution is to detect the eject command. Any stable and reliable UDF implementation will write the VAT before it releases the disc for ejection. Hence, if the drive knows it needs to write the KLA to a disc with a sequential access type and the UDF driver has released the disc for ejection, the drive can safely assume that the VAT has been written and that it will be the last valid block on disc. Another option is to let the application give a command to the drive telling it to write the KLA.

According to the present invention the drive is able to access the digital rights management data which are stored in the program area by using a file system level structure without actually knowing the file system. The advantage is that even non-compliant or unaware implementations maintain the information.

## Claims

1. Record carrier having a program memory area (PMA) for storing administrative data, a lead in area, a program area for storing user data and a lead out area, wherein
- digital rights management data are stored in the program area,
- a DRM pointer entry (ALP) comprising the entry point for said digital rights management data is stored in the program area after said digital rights management (DRM) data, and
- a drive-readable entry (E2, IUVD, FE) comprising an information allowing the drive to find said DRM pointer entry (ALP) and to access said digital rights management (DRM) data is stored in said program area or said program memory area.

2. Record carrier as claimed in claim 1, wherein an ALP pointer entry (E2) comprising the address of said DRM pointer entry (ALP) is stored in the program memory area (PMA).

3. Record carrier as claimed in claim 1, wherein an ALP pointer entry (E2) comprising a reference to a virtual allocation table entry (VAT) pointing to said DRM pointer entry (ALP) is stored in the program memory area (PMA).

4. Record carrier as claimed in claim 1, wherein a descriptor, in particular an implementation use volume descriptor (IUVD), storing a reference to a virtual allocation table entry (VAT) pointing to said DRM pointer entry (ALP) is stored in the program area.

5. Record carrier as claimed in claim 3 or 4, wherein said reference to said virtual allocation table entry (VAT) comprises the sequence number of said virtual allocation table entry (VAT).

6. Record carrier as claimed in claim 3 or 4, wherein said reference to said virtual allocation table entry (VAT) comprises the physical address of said virtual allocation table entry (VAT) within the sector of the program area storing said virtual allocation table entry (VAT).

7. Record carrier as claimed in claim 1, wherein an ALP pointer entry (E2) is stored in the program memory area (PMA), said ALP pointer entry (E2) comprising a first virtual allocation table entry comprising a pointer to said DRM pointer entry (ALP) and a second virtual allocation table entry (VAT), in particular located just before said first entry, indicating that said first entry comprises said pointer to said DRM pointer entry (ALP).

8. Record carrier as claimed in claim 1, wherein a file containing said DRM pointer entry (ALP) or a pointer to said DRM pointer entry (ALP) and a file entry (FE) describing said file in the file system are stored in the program area.

9. A method of accessing digital rights management data stored in the program area of a record carrier as claimed in claim 1, comprising the steps of:
- reading a drive-readable entry (E2, IUVD, FE), which is stored in said program area or said program memory area, comprising an information allowing the drive to find said DRM pointer entry (ALP) and to access said digital rights management (DRM) data,
- using said information comprised in said drive-readable entry to read said DRM pointer entry (ALP), which is stored in the program area after said digital rights management (DRM) data, comprising the entry point for said digital rights management data, and
- using said entry point comprised in said DRM pointer entry (ALP) to access said digital rights management data.

10. A method of recording digital rights management data on a record carrier as claimed in claim 1, comprising the steps of:
- storing said digital rights management data in the program area,
- storing a DRM pointer entry (ALP) in the program area after said digital rights management (DRM) data, said DRM pointer entry (ALP) comprising the entry point for said digital rights management data, and
- storing a drive-readable entry (E2, IUVD, FE) in said program area or said program memory area, said drive-readable entry comprising an information allowing the drive to find said DRM pointer entry (ALP) and to access said digital rights management (DRM) data.

11. Drive for accessing digital rights management data stored in the program area of a record carrier as claimed in claim 1, comprising:
- reading means for reading a drive-readable entry (E2, IUVD, FE), which is stored in said program area or said program memory area, comprising an information allowing the drive to find said DRM pointer entry (ALP) and to access said digital rights management (DRM) data, and
- evaluation means for evaluating said information comprised in said drive-readable entry and transmitting it to said reading means,
said reading means being adapted to read said DRM pointer entry (ALP), which is stored in the program area after said digital rights management (DRM) data, comprising the entry point for said digital rights management data,
said evaluation means being adapted for evaluating said entry point comprised in said DRM pointer entry (ALP) and transmitting it to said reading means for accessing said digital rights management data.

12. Recording device for recording digital rights management data on a record carrier as claimed in claim 1, comprising recording means for storing said digital rights management data in the program area, for storing a DRM pointer entry (ALP) in the program area after said digital rights management (DRM) data, said DRM pointer entry (ALP) comprising the entry point for said digital rights management data and for storing a drive-readable entry (E2, IUVD, FE) in said program area or said program memory area, said drive-readable entry comprising an information allowing the drive to find said DRM pointer entry (ALP) and to access said digital rights management (DRM) data.

13. Computer program comprising computer program code means for causing a computer to perform the steps of the method as claimed in claim 9 or 10 when said computer program is run on a computer.

## Patentansprüche

1. Aufzeichnungsträger mit einem Programmspeichergebiet (PMA "program memory area") zum Speichern von Verwaltungsdaten, einem Einführungsgebiet, einem Programmgebiet zum Speichern von Benutzerdaten und einem Ausführungsgebiet, wobei:
- digitale Rechteverwaltungsdaten in dem Programmgebiet gespeichert werden,
- eine DRM Zeigereingabe (ALP), die den Eingabepunkt für die genannten digitalen Rechteverwaltungsdaten enthält, in dem Programmgebiet hinter den genannten digitalen Rechteverwaltungsdaten (DRM) gespeichert wird, und
- eine von dem Laufwerk auslesbare Eingabe (E2, IUVD, FE) eine Information enthält, die es ermöglicht, dass das Laufwerk die genannte DRM Zeigereingabe (ALP) findet und auf die genannten digitalen Rechteverwaltungsdaten (DRM) zugreifen kann, die in dem genannten Programmgebiet oder in dem genannten Programmspeichergebiet gespeichert sind.

2. Aufzeichnungsträger nach Anspruch 1, wobei eine ALP Zeigereingabe (E2), welche die Adresse der genannten DRM Zeigereingabe enthält, in dem Programmspeichergebiet (PMA) gespeichert ist.

3. Aufzeichnungsträger nach Anspruch 1, wobei eine ALP Zeigereingabe (E2), die einen Hinweis auf eine virtuelle Zuordnungstabelleneingabe (VAT) aufweist, die auf die genannte DRM Zeigereingabe (ALP) zeigt, in dem Programmspeichergebiet (PMA) gespeichert ist.

4. Aufzeichnungsträger nach Anspruch 1, wobei ein Deskriptor, insbesondere ein Implementierungsverwendungsvolumendeskriptor (IUVD), der einen Hinweis auf eine virtuelle Zuordnungstabelleneingabe (VAT) speichert, der auf die genannte DRM Zeigereingabe (ALP) zeigt, in dem Programmgebiet gespeichert ist.

5. Aufzeichnungsträger nach Anspruch 3 oder 4, wobei der genannte Hinweis auf die genannte virtuelle Zuordnungstabelleneingabe (VAT) die Folgenummer der genannten virtuellen Zuordnungstabelleneingabe (VAT) aufweist.

6. Aufzeichnungsträger nach Anspruch 3 oder 4, wobei der genannte Hinweis auf die genannte virtuelle Zuordnungstabelleneingabe (VAT) die physikalische Adresse der genannten virtuellen Zuordnungstabelleneingabe (VAT) innerhalb des Sektors des Programmgebietes, der die genannte virtuelle Zuordnungstabelleneingabe (VAT) speichert, enthält.

7. Aufzeichnungsträger nach Anspruch 1, wobei eine ALP Zeigereingabe (E2) in dem Programmspeichergebiet (PMA) gespeichert wird, wobei die genannte ALP Zeigereingabe (E2) eine erste virtuelle Zuordnungstabelleneingabe aufweist, die einen Zeiger auf die genannte DRM Zeigereingabe (ALP) aufweist, sowie eine zweite virtuelle Zuordnungstabelleneingabe (VAT) aufweist, insbesondere unmittelbar vor der genannten ersten Eingabe liegend, die angibt, dass die genannte erste Eingabe den genannten Zeiger auf die genannte DRM Zeigereingabe (ALP) enthält.

8. Aufzeichnungsträger nach Anspruch 1, wobei eine Datei mit der genannten DRM Zeigereingabe (ALP) oder einem Zeiger auf die genannte DRM Zeigereingabe (ALP), und eine Dateieingabe (FE), welche die genannte Datei in dem Dateiverwaltungssystem in dem Programmgebiet beschreibt, gespeichert sind.

9. Verfahren zum Zugreifen auf digitale Rechteverwaltungsdaten, die in dem Programmgebiet eines Aufzeichnungsträgers gespeichert sind, nach Anspruch 1, wobei dieses Verfahren die nachfolgenden Verfahrensschritte umfasst:
- das Auslesen einer mit einem Laufwerk auslesbaren Eingabe (E2, IUVD, FE), die in dem genannten Programmgebiet oder in dem genannten Programmspeichergebiet gespeichert ist, die eine Information enthält, durch die das Laufwerk die genannte DRM Zeigereingabe (ALP) finden und auf die genannten digitalen Rechteverwaltungsdaten (DRM) zugreifen kann,
- das Verwenden der genannten Information in der genannten mit einem Laufwerk auslesbaren Eingabe zum Auslesen der genannten DRM Zeigereingabe (ALP), die in dem Programmgebiet hinter den genannten digitalen Rechteverwaltungsdaten (DRM) gespeichert sind, die den Eingabepunkt für die genannten digitalen Rechteverwaltungsdaten aufweisen, und
- das Verwenden des Eingabepunktes in der genannten DRM Zeigereingabe (ALP) um auf die genannten digitalen Rechteverwaltungsdaten einzugreifen.

10. Verfahren zum Aufzeichnen digitaler Rechteverwaltungsdaten auf einem Aufzeichnungsträger nach Anspruch 1, wobei das Verfahren die nachfolgenden Verfahrensschritte umfasst:
- das Speichern der genannten digitalen Rechteverwaltungsdaten in dem Programmgebiet,
- das Speichern einer DRM Zeigereingabe (ALP) in dem Programmgebiet hinter den genannten digitalen Rechteverwaltungsdaten (DRM), wobei die genannte DRM Zeigereingabe (ALP) den Eingabepunkt für die genannten digitalen Rechteverwaltungsdaten aufweist, und
- das Speichern einer mit einem Laufwerk auslesbaren Eingabe (E2, IUVD, FE) in dem genannten Programmgebiet oder dem genannten Programmspeichergebiet, wobei die genannte mit einem Laufwerk auslesbare Eingabe eine Information enthält, die es ermöglicht, dass das Laufwerk die genannte DRM Zeigereingabe (ALP) findet und auf die genannten digitalen Rechteverwaltungsdaten (DRM) zugreift.

11. Laufwerk zum Zugreifen auf digitale Rechteverwaltungsdaten, die in dem Programmgebiet eines Aufzeichnungsträgers nach Anspruch gespeichert sind, wobei das Laufwerk Folgendes umfasst:
- Lesemittel zum Auslesen einer mit einem Laufwerk auslesbaren Eingabe (E2, IUVD, FE), die in dem genannten Programmgebiet oder in dem genannten Programmspeichergebiet gespeichert ist, mit einer Information, die es ermöglicht, dass das Laufwerk die genannte DRM Zeigereingabe (ALP) findet und auf die genannten digitalen Rechteverwaltungsdaten (DRM) zugreift, und
- Bewertungsmittel zum Bewerten der genannten Information in der genannten mit einem Laufwerk auslesbaren Eingabe und zum Übertragen dieser Information zu den genannten Lesemitteln,
wobei die genannten Lesemittel dazu vorgesehen sind, die genannte RDM Zeigereingabe (ALP) zu lesen, die in dem Programmgebiet hinter den genannten digitalen Rechteverwaltungsdaten (DRM) gespeichert sind, die den Eingabepunkt für die genannten digitalen Rechteverwaltungsdaten enthalten,
wobei die genannten Bewertungsmittel dazu vorgesehen sind, den genannten Eingabepunkt in der genannten DRM Zeigereingabe (ALP) zu bewerten und diesen Punkt zu den Lesemitteln zum Zugreifen auf die genannten digitalen Rechteverwaltungsdaten zu übertragen.

12. Aufzeichnungsanordnung zum Aufzeichnen digitaler Rechteverwaltungsdaten auf einem Aufzeichnungsträger na1, mit Aufzeichnungsmitteln zum Speichern der genannten digitalen Rechteverwaltungsdaten in dem Programmgebiet, zum Speichern einer DRM Zeigereingabe (ALP) in dem Programmgebiet hinter den genannten digitalen Rechteverwaltungsdaten (DRM), wobei die genannte DRM Zeigereingabe (ALP) den Eingabepunkt für die genannten digitalen Rechteverwaltungsdaten und für die Speicherung einer mit einem Laufwerk auslesbaren Eingabe (E2, IUVD, FE) in dem genannten Programmgebiet oder in dem genannten Programmspeichergebiet, wobei die mit einem Laufwerk auslesbare Eingabe eine Information enthält, die es ermöglicht, dass das Laufwerk die genannte DRM Zeigereingabe (ALP) findet und auf die genannten digitalen Rechteverwaltungsdaten (DRM) zugreift.

13. Computerprogramm mit Computerprogrammcodemitteln um dafür zu sorgen, dass ein Computer die Verfahrensschritte des Verfahrens nach Anspruch 9 oder 10 durchführt, wenn das genannte Computerprogramm in einem Computer läuft.

## Revendications

1. Support d'enregistrement comprenant une zone de mémoire de programme (PMA) destinée à stocker des données administratives, une zone d'entrée, une zone de programme destinée à stocker des données d'utilisateur, et une zone de sortie, dans lequel
- des données de gestion des droits numériques (DRM) sont stockées dans la zone de programme;
- une entrée de pointeur DRM (ALP), comprenant le point d'entrée pour lesdites données de gestion des droits numériques, est stockée dans la zone de programme après lesdites données de gestion des droits numériques (DRM), et
- une entrée lisible par un lecteur (E2, IUVD, FE), comprenant des informations permettant au lecteur de trouver ladite entrée de pointeur DRM (ALP) et d'accéder auxdites données de gestion des droits numériques (DRM), est stockée dans ladite zone de programme ou ladite zone de mémoire de programme.

2. Support d'enregistrement suivant la revendication 1, dans lequel une entrée de pointeur ALP (E2) comprenant l'adresse de ladite entrée de pointeur DRM (ALP) est stockée dans la zone de mémoire de programme (PMA).

3. Support d'enregistrement suivant la revendication 1, dans lequel une entrée de pointeur ALP (E2), comprenant une référence à une entrée de table d'attribution virtuelle (VAT) pointant vers ladite entrée de pointeur DRM (ALP), est stockée dans la zone de mémoire de programme (PMA).

4. Support d'enregistrement suivant la revendication 1, dans lequel un descripteur, notamment un descripteur de volume d'utilisation de version (IUVD), stockant une entrée de table d'attribution virtuelle (VAT) pointant vers ladite entrée de pointeur DRM (ALP), est stocké dans la zone de programme.

5. Support d'enregistrement suivant la revendication 3 ou 4, dans lequel ladite référence à ladite entrée de table d'attribution virtuelle (VAT) comprend le numéro d'ordre de ladite entrée de table d'attribution virtuelle (VAT).

6. Support d'enregistrement suivant la revendication 3 ou 4, dans lequel ladite référence à ladite entrée de table d'attribution virtuelle (VAT) comprend l'adresse physique de ladite entrée de table d'attribution virtuelle (VAT) à l'intérieur du secteur de la zone de programme stockant ladite entrée de table d'attribution virtuelle (VAT).

7. Support d'enregistrement suivant la revendication 1, dans lequel une entrée de pointeur ALP (E2) est stockée dans la zone de mémoire de programme (PMA), ladite entrée de pointeur ALP (E2) comprenant une première entrée de table d'attribution virtuelle présentant un pointeur vers ladite entrée de pointeur DRM (ALP) et une seconde entrée de table d'attribution virtuelle (VAT), située notamment juste avant ladite première entrée, indiquant que ladite première entrée comprend ledit pointeur vers ladite entrée de pointeur DRM (ALP).

8. Support d'enregistrement suivant la revendication 1, dans lequel un fichier contenant ladite entrée de pointeur DRM (ALP) ou un pointeur vers ladite entrée de pointeur DRM (ALP) ainsi qu'une entrée de fichier (FE) décrivant ledit fichier dans le système de fichiers sont stockés dans la zone de programme.

9. Procédé permettant d'accéder à des données de gestion des droits numériques stockées dans la zone programme d'un support d'enregistrement suivant la revendication 1, comprenant les étapes pour :
- lire une entrée lisible par un lecteur (E2, IUVD, FE), laquelle est stockée dans ladite zone de programme ou ladite zone de mémoire de programme, comprenant des informations permettant au lecteur de trouver ladite entrée de pointeur DRM (ALP) et d'accéder auxdites données de gestion des droits numériques (DRM);
- utiliser lesdites informations comprises dans ladite entrée lisible par un lecteur pour lire ladite entrée de pointeur DRM (ALP), laquelle est stockée dans la zone de programme après lesdites données de gestion des droits numériques (DRM), comprenant le point d'entrée pour lesdites données de gestion des droits numériques, et
- utiliser ledit point d'entrée compris dans ladite entrée de pointeur DRM (ALP) pour accéder auxdites données de gestion des droits numériques.

10. Procédé permettant d'enregistrer des données de gestion des droits numériques sur un support d'enregistrement suivant la revendication 1, comprenant les étapes pour :
- stocker lesdites données de gestion des droits numériques dans la zone de programme ;
- stocker une entrée de pointeur DRM (ALP) dans la zone de programme après lesdites données de gestion des droits numériques (DRM), ledit point d'entrée de pointeur DRM (ALP) comprenant le point d'entrée pour lesdites données de gestion des droits numériques, et
- stocker une entrée lisible par un lecteur (E2, IUVD, FE) dans ladite zone de programme ou ladite zone de mémoire de programme, ladite entrée lisible par un lecteur comprenant des informations permettant au lecteur de trouver ladite entrée de pointeur DRM (ALP) et d'accéder auxdites données de gestion des droits numériques (DRM).

11. Dispositif permettant d'accéder aux données de gestion des droits numériques stockées dans la zone de programme d'un support d'enregistrement suivant la revendication 1, comprenant :
- des moyens de lecture destinés à lire une entrée lisible par lecteur (E2, IUVD, FE), laquelle est stockée dans ladite zone de programme ou ladite zone de mémoire de programme, comprenant des informations permettant au lecteur de trouver ladite entrée de pointeur DRM (ALP) et d'accéder auxdites données de gestion des droits numériques (DRM), et
- des moyens d'évaluation destinés à évaluer lesdites informations comprises dans ladite entrée lisible par un lecteur et à transmettre celles-ci auxdits moyens de lecture, lesdits moyens de lecture étant conçus pour lire ladite entrée de pointeur DRM (ALP), laquelle est stockée dans la zone de programme juste après lesdites données de gestion des droits numériques (DRM), comprenant le point d'entrée pour lesdites données de gestion des droits numériques, et
lesdits moyens d'évaluation étant conçus pour évaluer ledit point d'entrée compris dans ladite entrée de pointeur DRM (ALP) et le transmettre auxdits moyens de lecture pour accéder auxdites données de gestion des droits numériques.

12. Dispositif d'enregistrement destiné à enregistrer des données de gestion de droits numériques sur un support d'enregistrement suivant la revendication 1, comprenant des moyens d'enregistrement destinés à stocker desdites données de gestion des droits numériques dans la zone de programme, à stocker une entrée de pointeur DRM (ALP) dans la zone de programme après lesdites données de gestion des droits numériques (DRM), ladite entrée de pointeur DRM (ALP) comprenant le point d'entrée pour lesdites données de gestion des droits numériques, et à stocker une entrée lisible par un lecteur (E2, IUVD, FE) dans ladite zone de programme ou zone de mémoire de programme, ladite entrée lisible par un lecteur comprenant des informations permettant au lecteur de trouver ladite entrée de pointeur DRM (ALP) et d'accéder auxdites données de gestion des droits numériques (DRM).

13. Programme informatique comprenant des moyens de code de programme informatique permettant d'amener un ordinateur à exécuter les étapes du procédé suivant la revendication 9 ou 10 lorsque ledit programme informatique est exécuté sur un ordinateur.
